# EUROPÄISCHE PATENTANMELDUNG

(11) **EP 2 949 575 A1**
(43) Veröffentlichungstag der Anmeldung: **02.12.2015**
(21) Anmeldenummer: 14170374.4
(22) Anmeldetag: 28.05.2014
(51) Int. Cl.: B63J 3/02, B63H 21/14

(54) **Antriebssystem eines Schiffes und dessen Betrieb**

(71) Anmelder: Siemens Aktiengesellschaft, 80333 München (DE)
(72) Erfinder: Radebold, Helmut, 25379 Herzhorn (DE); Tigges, Kay, 20257 Hamburg (DE)

(57) **Zusammenfassung**

Antriebssystem eines Schiffes und ein Verfahren zum Betrieb des Antriebssystems. Das Antriebssystem umfasst wenigstens einen Antriebsverbrennungsmotor (3) zum Antrieb des Schiffes und eine Energiegewinnungsvorrichtung (9) zur Gewinnung von elektrischer Energie aus Abgasen wenigstens eines Antriebsverbrennungsmotors. Das Antriebssystem ist dazu ausgebildet, gewonnene elektrische Energie aus Abgasen wahlweise zum Antrieb des Schiffes zu nutzen oder in ein elektrisches Bordnetz (5) des Schiffes einzuspeisen oder anteilig zum Antrieb des Schiffes zu nutzen und in das Bordnetz des Schiffes einzuspeisen.

## Beschreibung

Die Erfindung betrifft ein Antriebssystem eines Schiffes mit wenigstens einem Antriebsverbrennungsmotor zum Antrieb des Schiffes und einer Energiegewinnungsvorrichtung zur Gewinnung von elektrischer Energie aus Abgasen wenigstens eines Antriebsverbrennungsmotors. Ferner betrifft die Erfindung ein Verfahren zum Betrieb eines derartigen Antriebssystems.

Energiegewinnungsvorrichtungen zur Gewinnung von elektrischer Energie aus Abgasen von Antriebsverbrennungsmotoren von Schiffen werden zurzeit in einer Weise betrieben, die auf größtmögliche Leistungsausbeute angelegt ist. Dabei wird die rückgewonnene Energie elektrisch in das Bordnetz eingespeist und dann die entsprechende Überschussleistung über einen Elektromotor auf die Antriebswelle zurückgespeist.

Eine Verbrennungskraftmaschinenanlage mit Abgasenergierückgewinnung für schwimmende Einrichtungen, z.B. für Schiffe und Offshore-Plattformen, ist beispielsweise aus WO 2010/088980 A1 bekannt.

Der Erfindung liegt die Aufgabe zugrunde, ein verbessertes Antriebssystem eines Schiffes mit wenigstens einem Antriebsverbrennungsmotor zum Antrieb des Schiffes und einer Energiegewinnungsvorrichtung zur Gewinnung von elektrischer Energie aus Abgasen wenigstens eines Antriebsverbrennungsmotors anzugeben. Ferner liegt der Erfindung die Aufgabe zugrunde, ein verbessertes Verfahren zum Betrieb eines derartigen Antriebssystems anzugeben.

Die Aufgabe wird erfindungsgemäß hinsichtlich des Antriebssystems durch die Merkmale des Anspruchs 1 und hinsichtlich des Verfahrens durch die Merkmale des Anspruchs 5 gelöst. Vorteilhafte Ausgestaltungen der Erfindung sind Gegenstand der Unteransprüche.

Ein erfindungsgemäßes Antriebssystem eines Schiffes umfasst wenigstens einen Antriebsverbrennungsmotor zum Antrieb des Schiffes und eine Energiegewinnungsvorrichtung zur Gewinnung von elektrischer Energie aus Abgasen wenigstens eines Antriebsverbrennungsmotors. Das Antriebssystem ist dazu ausgebildet, gewonnene elektrische Energie aus Abgasen wahlweise zum Antrieb des Schiffes zu nutzen oder in ein elektrisches Bordnetz des Schiffes einzuspeisen oder anteilig zum Antrieb des Schiffes zu nutzen und in das Bordnetz des Schiffes einzuspeisen.

Die wahlweise und anteilige Nutzbarkeit gewonnener elektrischer Energie aus Abgasen zum Antrieb des Schiffes und zur Einspeisung gewonnener elektrischer Energie aus Abgasen in das Bordnetz ermöglicht dabei vorteilhaft eine hinsichtlich der Betriebskosten optimierte Nutzung der gewonnenen elektrischen Energie aus Abgasen gemäß dem unten beschriebenen erfindungsgemäßen Verfahren. Dadurch können durch gewonnene elektrische Energie aus Abgasen nicht nur die Energieversorgung des Bordnetzes durch Hilfsverbrennungsmotoren (so genannte "Hilfsdiesel") und/oder der Antrieb des Schiffes durch einen Antriebsverbrennungsmotor unterstützt werden, sondern die gewonnene elektrische Energie aus Abgasen kann derart auf die Nutzung zum Antrieb des Schiffes und die Energieversorgung des Bordnetzes verteilt werden, dass die Betriebskosten minimiert werden. Dies ermöglicht eine effiziente und optimierte Nutzung gewonnener elektrischer Energie aus Abgasen.

Eine Ausgestaltung der Erfindung sieht wenigstens einen Antriebselektromotor zum Antrieb des Schiffes vor, wobei der Antriebselektromotor durch gewonnene elektrische Energie aus Abgasen antreibbar ist.

Dies ermöglicht vorteilhaft die Nutzung gewonnener elektrischer Energie aus Abgasen zum Antrieb des Schiffes, wobei wenigstens ein Antriebsverbrennungsmotor und wenigstens ein durch gewonnene elektrische Energie aus Abgasen antreibbarer Antriebselektromotor einen Hybridantrieb des Schiffes bilden.

Eine Weitergestaltung der vorgenannten Ausgestaltung der Erfindung sieht wenigstens einen Akkumulator für wenigstens einen Antriebselektromotor vor, wobei gewonnene elektrische Energie aus Abgasen mittels des Akkumulators speicherbar ist.

Dadurch kann die gewonnene elektrische Energie aus Abgasen noch flexibler und effizienter genutzt werden, indem sie mittels des Akkumulators gespeichert wird, wenn sie momentan nicht oder nicht vollständig benötigt wird.

Eine weitere Ausgestaltung der Erfindung sieht wenigstens einen als Zweitakt-Dieselmotor ausgebildeten Antriebsverbrennungsmotor zum Antrieb des Schiffes vor.

Zweitakt-Dieselmotoren eignen sich aufgrund ihres im Vergleich zu anderen Verbrennungsmotoren hohen Wirkungsgrades besonders vorteilhaft zum Antrieb von Schiffen, da Schiffe nur eine begrenzte Kapazität für eine Kraftstofflagerung bieten.

Bei dem erfindungsgemäßen Verfahren zum Betrieb eines erfindungsgemäßen Antriebssystems werden ein momentaner Antriebsenergiebedarf für den Antrieb des Schiffes, ein momentaner Bordnetzenergiebedarf für das Bordnetz des Schiffes und die momentan gewonnene elektrische Energie aus Abgasen ermittelt. Ferner werden Betriebskosten für die Deckung des ermittelten Antriebsenergiebedarfs und des ermittelten Bordnetzenergiebedarfs unter Verwendung der gewonnenen elektrischen Energie aus Abgasen und in Abhängigkeit von einer anteiligen Aufteilung der gewonnenen elektrischen Energie aus Abgasen zur Deckung des ermittelten Antriebsenergiebedarfs und des ermittelten Bordnetzenergiebedarfs ermittelt. Die gewonnene elektrische Energie aus Abgasen wird in Abhängigkeit von den ermittelten Betriebskosten anteilig zur Deckung des ermittelten Antriebsenergiebedarfs und des ermittelten Bordnetzenergiebedarfs verwendet.

Die Erfindung ermöglicht damit vorteilhaft eine die Betriebskosten berücksichtigende Nutzung gewonnener elektrischer Energie aus Abgasen, bei der die gewonnene elektrische Energie aus Abgasen betriebskostenabhängig und anteilig zur Deckung des ermittelten Antriebsenergiebedarfs und des ermittelten Bordnetzenergiebedarfs verwendet wird.

Dabei wird die gewonnene elektrische Energie aus Abgasen in Abhängigkeit von den ermittelten Betriebskosten vorzugsweise derart anteilig zur Deckung des ermittelten Antriebsenergiebedarfs und des ermittelten Bordnetzenergiebedarfs verwendet, dass die Betriebskosten minimiert werden.

Die Minimierung der Betriebskosten ermöglicht vorteilhaft eine optimale Nutzung der gewonnenen elektrischen Energie aus Abgasen.

Die Betriebskosten werden dabei vorzugsweise unter Einbeziehung eines spezifischen Kraftstoffverbrauchs des wenigstens einen Antriebsverbrennungsmotors ermittelt.

Der spezifische Kraftstoffverbrauch eines Verbrennungsmotors ist als das Verhältnis des Kraftstoffverbrauchs pro Zeiteinheit und der abgegebenen mechanischen Leistung des Verbrennungsmotors definiert. Er ist ein Maß für die Effizienz des Verbrennungsmotors und hängt von dem Arbeitspunkt des Verbrennungsmotors ab. Durch die Berücksichtigung des spezifischen Kraftstoffverbrauchs des Antriebsverbrennungsmotors bei der Ermittlung der Betriebskosten wird vorteilhaft der arbeitspunktabhängige Kraftstoffverbrauch des Antriebsverbrennungsmotors zur optimierten Nutzung der gewonnenen elektrischen Energie aus Abgasen berücksichtigt. Insbesondere kann dadurch der Kraftstoffverbrauch des Schiffes reduziert und optimiert werden.

Ferner werden die Betriebskosten vorzugsweise unter Einbeziehung eines spezifischen Kraftstoffverbrauchs wenigstens eines Hilfsverbrennungsmotors zur Energieversorgung des Bordnetzes ermittelt.

Damit wird auch der arbeitspunktabhängige Kraftstoffverbrauch von Hilfsverbrennungsmotoren ("Hilfsdiesel") bei der Ermittlung der Betriebskosten und der Nutzung der gewonnenen elektrischen Energie aus Abgasen berücksichtigt. Dies ermöglicht vorteilhaft eine noch effizientere Nutzung der gewonnenen elektrischen Energie aus Abgasen und eine weitere Reduzierung und Optimierung des Kraftstoffverbrauchs des Schiffes.

Eine weitere Ausgestaltung der Erfindung sieht vor, dass die Betriebskosten unter Einbeziehung von Wartungskosten für wenigstens einen Hilfsverbrennungsmotor zur Energieversorgung des Bordnetzes bezogen auf die von dem Hilfsverbrennungsmotor geleistete Arbeit ermittelt werden.

Diese Ausgestaltung der Erfindung berücksichtigt vorteilhaft, dass die Wartungskosten für einen Hilfsverbrennungsmotor von dessen geleisteter Arbeit abhängen, und bezieht auch diese Wartungskosten zur optimierten Nutzung der gewonnenen elektrischen Energie aus Abgasen ein.

Ein erfindungsgemäßes Energieversorgungssystem eines Schiffes umfasst ein Bordnetz, ein erfindungsgemäßes Antriebssystem und eine Steuereinheit zur Ermittlung einer anteiligen Nutzung der gewonnenen elektrischen Energie aus Abgasen zum Antrieb des Schiffes und zur Einspeisung in das Bordnetz. Vorzugsweise weist das Energieversorgungssystem ferner wenigstens einen Hilfsverbrennungsmotor zur Energieversorgung des Bordnetzes auf.

Die Vorteile eines derartigen Energieversorgungssystems eines Schiffes ergeben sich aus den oben genannten Vorteilen eines erfindungsgemäßen Antriebssystems.

Ein erfindungsgemäßes Verfahren zum Betrieb eines derartigen Energieversorgungssystems sieht dementsprechend vor, dass das Antriebssystem gemäß dem erfindungsgemäßen Verfahren zum Betrieb eines erfindungsgemäßen Antriebssystems betrieben wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Blockdiagramm eines Energieversorgungssystems und damit verbundene Einheiten eines Schiffes,
- FIG 2: diagrammatisch einen spezifischen Kraftstoffverbrauch eines Antriebsverbrennungsmotors eines Schiffes und eine Geschwindigkeit des Schiffes in Abhängigkeit von einer Motorleistung des Antriebsverbrennungsmotors, und
- FIG 3: diagrammatisch einen spezifischen Kraftstoffverbrauch eines Antriebsverbrennungsmotors eines Schiffes ohne und mit einer zusätzlicher Verwendung gewonnener elektrischer Energie aus Abgasen zum Antrieb des Schiffes und eine Antriebsleistung in Abhängigkeit von einer Motorleistung des Antriebsverbrennungsmotors.

Einander entsprechende Teile sind in allen Figuren mit den gleichen Bezugszeichen versehen.

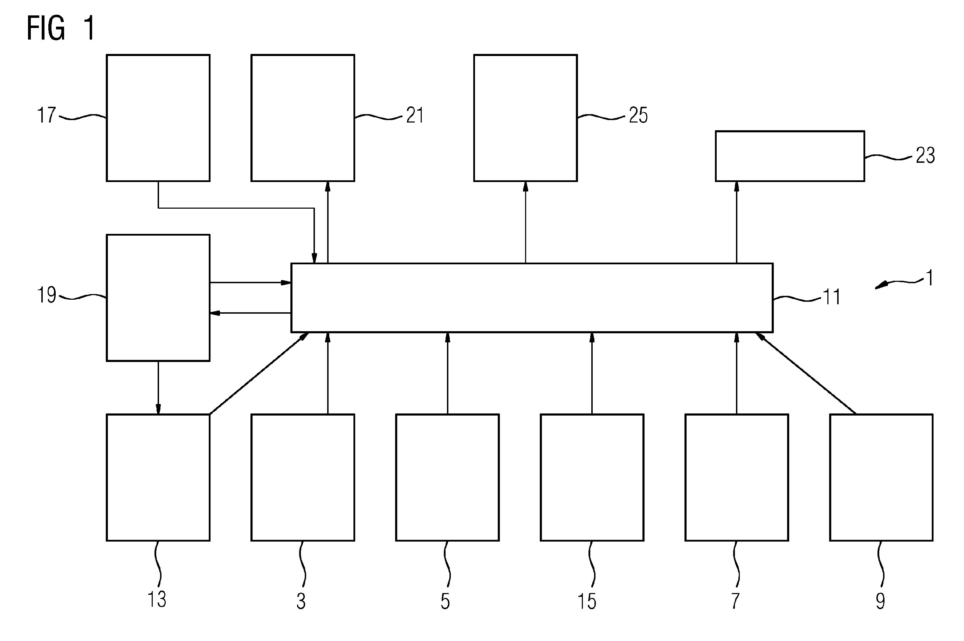

Figur 1 zeigt ein Blockdiagramm eines Energieversorgungssystems 1 und weitere damit verbundene Funktionseinheiten eines Schiffes. Das Energieversorgungssystem 1 umfasst einen Antriebsverbrennungsmotor 3, ein elektrisches Bordnetz 5, mehrere Hilfsverbrennungsmotoren 7, eine Energiegewinnungsvorrichtung 9 und eine Steuereinheit 11.

Der Antriebsverbrennungsmotor 3 ist als ein Zweitakt-Dieselmotor zum Antrieb des Schiffes über eine Propellerwelle 13 ausgebildet.

Die Hilfsverbrennungsmotoren 7 sind jeweils als ein Dieselmotor (so genannter "Hilfsdiesel") zur Energieversorgung des Bordnetzes 5 ausgebildet. Dazu treiben die Hilfsverbrennungsmotoren 7 jeweils einen Hilfsgenerator an. Die Hilfsverbrennungsmotoren 7 werden mittels Wartungsmitteln 15 gewartet.

Die Energiegewinnungsvorrichtung 9 ist zur Gewinnung von elektrischer Energie aus Abgasen des Antriebsverbrennungsmotors 3 ausgebildet. Dazu weist die Energieversorgungssystem 1 beispielsweise in bekannter Weise eine durch Abgase des Antriebsverbrennungsmotors 3 antreibbare Abgasturbine und einen von der Abgasturbine antreibbaren Energiegewinnungsgenerator auf.

Das Energieversorgungssystem 1 ist dazu ausgebildet, mittels der Energiegewinnungsvorrichtung 9 gewonnene elektrische Energie aus Abgasen wahlweise zum Antrieb des Schiffes zu nutzen oder in ein elektrisches Bordnetz des Schiffes einzuspeisen oder anteilig zum Antrieb des Schiffes zu nutzen und in das Bordnetz des Schiffes einzuspeisen. Um gewonnene elektrische Energie aus Abgasen ganz oder anteilig zum Antrieb des Schiffes zu nutzen, weist das Antriebssystem des Schiffes einen (nicht dargestellten) Antriebselektromotor auf, mittels dessen die Propellerwelle 13 antreibbar ist und der durch gewonnene elektrische Energie aus Abgasen antreibbar ist. Der Antriebsverbrennungsmotor 3 und der Antriebselektromotor bilden somit einen Hybridantrieb des Schiffes. Vorzugsweise ist dieser Antriebselektromotor auch als Generator betreibbar, so dass er zur Erzeugung elektrischer Energie verwendet werden kann, wenn er nicht zum Antrieb des Schiffes genutzt wird.

Mittels der Steuereinheit 11 wird in einer im Folgenden beschriebenen Weise ermittelt, wie die mittels der Energiegewinnungsvorrichtung 9 gewonnene elektrische Energie aus Abgasen zum Antrieb des Schiffes und zur Einspeisung in das Bordnetz 5 aufgeteilt wird. Der Steuereinheit 11 wird dazu insbesondere eine momentane Sollgeschwindigkeit 17 des Schiffes übermittelt. Ferner werden der Steuereinheit 11 für die Energieversorgung relevante Daten eines Navigationssystems 19 des Schiffes, beispielsweise zu einer Wettersituation, übermittelt.

Um die Aufteilung der gewonnenen elektrischen Energie aus Abgasen zu bestimmen, werden ein momentaner Antriebsenergiebedarf für den Antrieb des Schiffes in Abhängigkeit von der momentanen Sollgeschwindigkeit 17, ein momentaner Bordnetzenergiebedarf für das Bordnetz 5 und die momentan gewonnene elektrische Energie aus Abgasen ermittelt.

Die Steuereinheit 11 ermittelt aus diesen Informationen Betriebskosten für die Deckung des ermittelten Antriebsenergiebedarfs und des ermittelten Bordnetzenergiebedarfs unter Verwendung der gewonnenen elektrischen Energie aus Abgasen und in Abhängigkeit von einer anteiligen Aufteilung der gewonnenen elektrischen Energie aus Abgasen zur Deckung des ermittelten Antriebsenergiebedarfs und des ermittelten Bordnetzenergiebedarfs. Die anteilige Aufteilung der gewonnenen elektrischen Energie aus Abgasen zur Deckung des ermittelten Antriebsenergiebedarfs und des ermittelten Bordnetzenergiebedarfs wird von der Steuereinheit 11 derart ermittelt, dass diese Betriebskosten minimiert werden.

Bei der Ermittlung der Betriebskosten werden dabei insbesondere ein spezifischer Kraftstoffverbrauch des Antriebsverbrennungsmotors 3 und der Hilfsverbrennungsmotoren 7 sowie Wartungskosten für die Hilfsverbrennungsmotoren 7 bezogen auf die von den Hilfsverbrennungsmotoren 7 geleistete Arbeit berücksichtigt.

Von der Steuereinheit 11 wird die sich aus der ermittelten anteiligen Aufteilung der gewonnenen elektrischen Energie aus Abgasen ergebende Lastanforderung an den Antriebsverbrennungsmotor 3 ermittelt und an eine Hauptantriebssteuerung 21 des Schiffes übermittelt, mittels derer der Antriebsverbrennungsmotor 3 entsprechend gesteuert oder geregelt wird.

Ferner wird die ermittelte anteilige Aufteilung der gewonnenen elektrischen Energie aus Abgasen einer Schaltanlage 23 übermittelt, mittels derer der Antriebselektromotor und die Hilfsverbrennungsmotoren 7 entsprechend gesteuert oder geregelt werden.

Optional werden von der Steuereinheit 11 ermittelte Daten außerdem an das Navigationssystem 19 übermittelt.

Ferner wird von der Steuereinheit 11 optional ein momentaner Kraftstoffverbrauch ermittelt und an eine Anzeigeeinheit 25 zur Anzeige des Kraftstoffverbrauchs übermittelt. Dabei kann optional auch eine Kraftstoffersparnis gegenüber dem Antrieb des Schiffes allein durch den Antriebsverbrennungsmotor 3, d. h. ohne zusätzliche Verwendung von gewonnener elektrischer Energie aus Abgasen zum Antrieb des Schiffes, ermittelt und angezeigt werden.

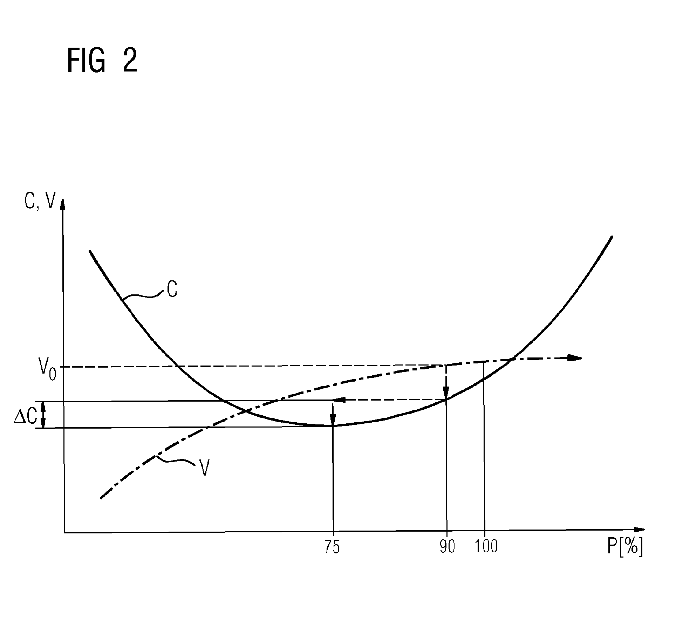

Figur 2 zeigt diagrammatisch einen typischen spezifischen Kraftstoffverbrauch C eines Antriebsverbrennungsmotors 3 eines Schiffes und eine Geschwindigkeit V des Schiffes jeweils in Abhängigkeit von einer Motorleistung P des Antriebsverbrennungsmotors 3 für den Fall, dass das Schiff allein durch den Antriebsverbrennungsmotor 3, d. h. ohne zusätzliche Verwendung von gewonnener elektrischer Energie aus Abgasen angetrieben wird. Dabei sind der spezifische Kraftstoffverbrauch C und die Geschwindigkeit V in beliebigen Einheiten dargestellt und die Motorleistung P ist prozentual im Verhältnis zu einer Auslegungsleistung des Antriebsverbrennungsmotors 3 angegeben. V₀ bezeichnet eine Auslegungsgeschwindigkeit, auf die der Antriebsverbrennungsmotor 3 ausgelegt ist, so dass eine Motorleistung P von 90 % der Auslegungsleistung des Antriebsverbrennungsmotors 3 der Auslegungsgeschwindigkeit V₀ entspricht.

Der spezifische Kraftstoffverbrauch C nimmt in dem dargestellten Beispiel bei einer Motorleistung P von 75 % der Auslegungsleistung des Antriebsverbrennungsmotors 3 ein Minimum an. Daraus resultiert ein dargestelltes Einsparpotential ΔC des spezifischen Kraftstoffverbrauchs C bei dem Betrieb mit der Auslegungsgeschwindigkeit V₀ durch Nutzung gewonnener elektrischer Energie aus Abgasen zur Unterstützung des Antriebsverbrennungsmotors 3. Die Erfindung sieht daher insbesondere vor, denjenigen Anteil gewonnener elektrischer Energie aus Abgasen, der zum Antrieb des Schiffes genutzt wird, derart festzulegen, dass dadurch bei dem Betrieb mit der Auslegungsgeschwindigkeit V₀ das Einsparpotential ΔC des spezifischen Kraftstoffverbrauchs C zumindest teilweise realisiert wird, soweit dies die Betriebskosten reduziert. Entsprechendes gilt für den Betrieb mit anderen Geschwindigkeiten V.

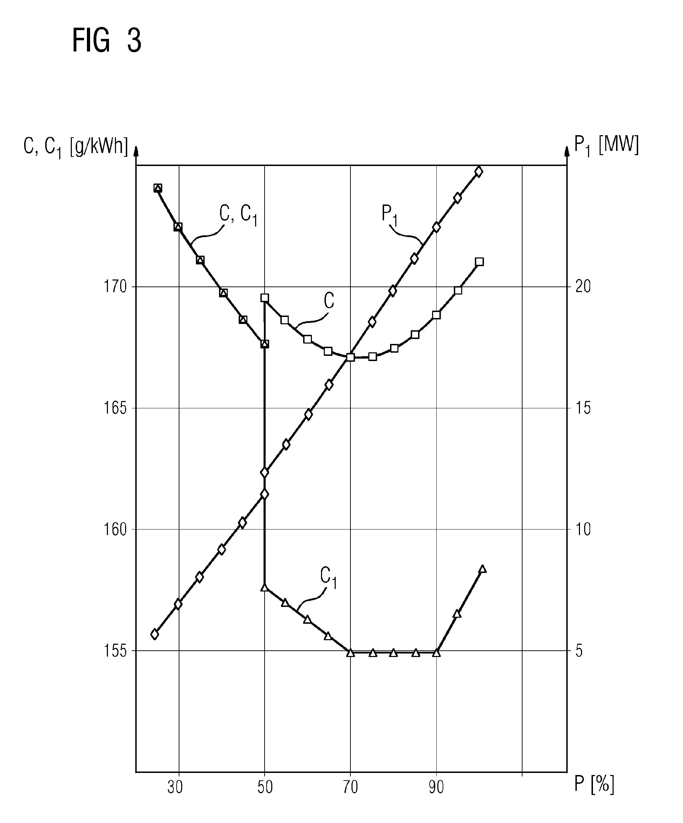

Die Erfindung zielt somit insbesondere auf eine Reduzierung des spezifischen Kraftstoffverbrauchs C des Antriebsverbrennungsmotors 3 durch eine entsprechende Unterstützung des Antriebsverbrennungsmotors 3 durch den mit gewonnener elektrischer Energie aus Abgasen angetriebenen Antriebselektromotor, soweit dies die Betriebskosten reduziert. Entsprechend der obigen Ausführungen wird jedoch zur Ermittlung der Aufteilung der gewonnenen elektrischen Energie aus Abgasen vorzugsweise nicht nur der spezifische Kraftstoffverbrauch C des Antriebsverbrennungsmotors 3 berücksichtigt, sondern es werden zusätzlich weitere die Betriebskosten beeinflussende Faktoren berücksichtigt wie ein spezifischer Kraftstoffverbrauch C der Hilfsverbrennungsmotoren 7 und Wartungskosten für die Hilfsverbrennungsmotoren 7 bezogen auf die von ihnen geleistete Arbeit. Dadurch ergibt sich, dass das Einsparpotential ΔC des spezifischen Kraftstoffverbrauchs C des Antriebsverbrennungsmotors 3 geschwindigkeitsabhängig nicht immer bzw. nur teilweise realisiert wird, wenn dies aufgrund der weiteren berücksichtigten Faktoren hinsichtlich der Betriebskostenminimierung vorteilhaft ist, siehe dazu auch Figur 3 und deren Beschreibung.

Figur 3 zeigt diagrammatisch und exemplarisch einen spezifischen Kraftstoffverbrauch C eines Antriebsverbrennungsmotors 3 eines Schiffes ohne eine Verwendung gewonnener elektrischer Energie aus Abgasen zum Antrieb des Schiffes und einen spezifischen Kraftstoffverbrauch C₁ des Antriebsverbrennungsmotors 3 mit einer zusätzlichen Verwendung gewonnener elektrischer Energie aus Abgasen zum Antrieb des Schiffes sowie eine Antriebsleistung P₁, die von dem Antriebsverbrennungsmotor 3 und dem mit gewonnener elektrischer Energie aus Abgasen angetriebenen Antriebselektromotor gemeinsam erbracht wird, jeweils in Abhängigkeit von einer Motorleistung P des Antriebsverbrennungsmotors 3. Die Motorleistung P ist wie in Figur 2 prozentual im Verhältnis zu einer Auslegungsleistung des Antriebsverbrennungsmotors 3 angegeben. Der spezifische Kraftstoffverbrauch C, C₁ ist jeweils in der Einheit g/kWh angegeben, die Antriebsleistung P₁ ist in der Einheit MW angegeben.

In dem dargestellten Beispiel wird gewonnene elektrische Energie aus Abgasen erst ab einer Motorleistung P von 50 % der Auslegungsleistung zum Antrieb des Schiffes genutzt, da bei kleineren Motorleistungen P eine Nutzung gewonnener elektrischer Energie aus Abgasen zum Antrieb des Schiffes aufgrund zu geringer Energieausbeute keine Betriebskostenminimierung liefert. Bei Motorleistungen P, die kleiner als 50 % der Auslegungsleistung sind, wird das Schiff daher nur durch den Antriebsverbrennungsmotor 3 angetrieben, so dass die spezifischen Kraftstoffverbräuche C, C₁ für diese Motorleistungen P übereinstimmen.

Ab einer Motorleistung P von 50 % der Auslegungsleistung erweist sich die Nutzung gewonnener elektrischer Energie aus Abgasen zum Antrieb des Schiffes als vorteilhaft, so dass für diese Motorleistungen P der spezifische Kraftstoffverbrauch C₁ gegenüber dem spezifischen Kraftstoffverbrauch C ohne Nutzung gewonnener elektrischer Energie aus Abgasen zum Antrieb des Schiffes um mehr als 10 g/kWh sinkt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Antriebssystem eines Schiffes, umfassend
- wenigstens einen Antriebsverbrennungsmotor (3) zum Antrieb des Schiffes
- und eine Energiegewinnungsvorrichtung (9) zur Gewinnung von elektrischer Energie aus Abgasen wenigstens eines Antriebsverbrennungsmotors (3),
- wobei das Antriebssystem dazu ausgebildet ist, gewonnene elektrische Energie aus Abgasen wahlweise zum Antrieb des Schiffes zu nutzen oder in ein elektrisches Bordnetz (5) des Schiffes einzuspeisen oder anteilig zum Antrieb des Schiffes zu nutzen und in das Bordnetz (5) des Schiffes einzuspeisen.

2. Antriebssystem nach Anspruch 1,
**gekennzeichnet durch** wenigstens einen Antriebselektromotor zum Antrieb des Schiffes, wobei der Antriebselektromotor **durch** gewonnene elektrische Energie aus Abgasen antreibbar ist.

3. Antriebssystem nach Anspruch 2,
**gekennzeichnet durch** wenigstens einen Akkumulator für wenigstens einen Antriebselektromotor, wobei gewonnene elektrische Energie aus Abgasen mittels des Akkumulators speicherbar ist.

4. Antriebssystem nach einem der vorhergehenden Ansprüche,
**gekennzeichnet durch** wenigstens einen als Zweitakt-Dieselmotor ausgebildeten Antriebsverbrennungsmotor (3) zum Antrieb des Schiffes.

5. Verfahren zum Betrieb eines Antriebssystems nach einem der vorgehenden Ansprüche, wobei
- ein momentaner Antriebsenergiebedarf für den Antrieb des Schiffes, ein momentaner Bordnetzenergiebedarf für das Bordnetz (5) des Schiffes und die momentan gewonnene elektrische Energie aus Abgasen ermittelt werden,
- Betriebskosten für die Deckung des ermittelten Antriebsenergiebedarfs und des ermittelten Bordnetzenergiebedarfs unter Verwendung der gewonnenen elektrischen Energie aus Abgasen und in Abhängigkeit von einer anteiligen Aufteilung der gewonnenen elektrischen Energie aus Abgasen zur Deckung des ermittelten Antriebsenergiebedarfs und des ermittelten Bordnetzenergiebedarfs ermittelt werden,
- und die gewonnene elektrische Energie aus Abgasen in Abhängigkeit von den ermittelten Betriebskosten anteilig zur Deckung des ermittelten Antriebsenergiebedarfs und des ermittelten Bordnetzenergiebedarfs verwendet wird.

6. Verfahren nach Anspruch 5,
**dadurch gekennzeichnet, dass** die gewonnene elektrische Energie aus Abgasen in Abhängigkeit von den ermittelten Betriebskosten derart anteilig zur Deckung des ermittelten Antriebsenergiebedarfs und des ermittelten Bordnetzenergiebedarfs verwendet wird, dass die Betriebskosten minimiert werden.

7. Verfahren nach Anspruch 5 oder 6,
**dadurch gekennzeichnet, dass** die Betriebskosten unter Einbeziehung eines spezifischen Kraftstoffverbrauchs (C, C₁) des wenigstens einen Antriebsverbrennungsmotors (3) ermittelt werden.

8. Verfahren nach einem der Ansprüche 5 bis 7,
**dadurch gekennzeichnet, dass** die Betriebskosten unter Einbeziehung eines spezifischen Kraftstoffverbrauchs (C, C₁) wenigstens eines Hilfsverbrennungsmotors (7) zur Energieversorgung des Bordnetzes (5) ermittelt werden.

9. Verfahren nach einem der Ansprüche 5 bis 8,
**dadurch gekennzeichnet, dass** die Betriebskosten unter Einbeziehung von Wartungskosten für wenigstens einen Hilfsverbrennungsmotor (7) zur Energieversorgung des Bordnetzes (5) bezogen auf die von dem Hilfsverbrennungsmotor (7) geleistete Arbeit ermittelt werden.

10. Energieversorgungssystem (1) eines Schiffes, umfassend ein Bordnetz (5), ein Antriebssystem gemäß einem der Ansprüche 1 bis 4 und eine Steuereinheit (11) zur Ermittlung einer anteiligen Nutzung der gewonnenen elektrischen Energie aus Abgasen zum Antrieb des Schiffes und zur Einspeisung in das Bordnetz (5).

11. Energieversorgungssystem (1) nach Anspruch 10, **gekennzeichnet durch** wenigstens einen Hilfsverbrennungsmotor (7) zur Energieversorgung des Bordnetzes (5).

12. Verfahren zum Betrieb eines Energieversorgungssystems (1) nach einem der Ansprüche 10 oder 11, wobei das Antriebssystem gemäß einem der Ansprüche 5 bis 9 betrieben wird.
